# EUROPEAN PATENT APPLICATION

(11) **EP 4 455 348 A1**
(43) Date of publication of application: **30.10.2024**
(21) Application number: 22911855.9
(22) Date of filing: 20.12.2022
(51) Int. Cl.: C22C 38/38, C21D 8/02, B23K 11/00, B23K 9/18

(54) **AUSTENITIC STEEL HAVING EXCELLENT EXTREME LOW TEMPERATURE TOUGHNESS IN HEAT-AFFECTED ZONE AND METHOD FOR MANUFACTURING SAME**

(30) Priority: 21.12.2021 KR 20210184272
(71) Applicant: POSCO Co., Ltd, Pohang-si, Gyeongsangbuk-do 37859 (KR)
(72) Inventor: LEE, Soon-Gi, Gwangyang-si, Jeollanam-do 57807 (KR); KANG, Sang-Deok, Gwangyang-si, Jeollanam-do 57807 (KR)
(74) Representative: Meissner Bolte Partnerschaft mbB
(86) International application number: PCT/KR2022/020835
(87) International publication number: WO 2023/121222

(57) **Abstract**

An aspect of the present invention provides: an austenitic high-manganese steel having excellent extreme low temperature toughness in a heat-affected zone; and a method for manufacturing same.

## Description

### [Technical Field]

The present disclosure relates to an austenitic steel and a method for manufacturing the same, and more specifically, to an austenitic high-manganese steel having excellent ultra-low temperature toughness in a weld heat-affected zone and a method for manufacturing the same.

### [Background Art]

Liquefied gases such as liquefied hydrogen (boiling point: -253°C), liquefied natural gas (LNG, boiling point: -164°C), liquefied oxygen (boiling point: -183°C), and liquefied nitrogen (boiling point: -196°C) need to be stored at ultra-low temperatures. Therefore, in order to store these gases, structures such as pressure vessels made of materials with sufficient toughness and strength at ultra-low temperatures are required.

As materials that can be used at low temperatures in a liquefied gas atmosphere, Cr-Ni-based stainless-steel alloys such as AISI 304, 9% of Ni steel, or 5000 series aluminum alloys have been used. However, in the case of the aluminum alloy, the alloy cost is high and a design thickness of the structure increases due to low strength, and its use is limited due to poor weldability. Although the Cr-Ni-based stainless and 9% of nickel (Ni) steel have greatly improved physical properties of aluminum, the Cr-Ni-based stainless and 9% of nickel (Ni) steel contain a large amount of expensive nickel (Ni), which is not preferable from an economic perspective.

### [Disclosure]

### [Technical Problem]

The present disclosure provides an austenitic steel that has excellent ultra-low temperature toughness in a weld heat-affected zone to be able to be used as a structural material in ultra-low temperature environments such as a liquefied gas storage tank and a liquefied gas transportation facility, and a method for manufacturing the same.

The subject of the present disclosure is not limited to the above. A person skilled in the art will have no difficulty understanding the further subject matter of the present disclosure from the general content of this specification.

### [Technical Solution]

In an aspect to the present disclosure, there is provided an austenitic steel, including: by wt%, manganese (Mn): 10 to 45%, carbon (C): range satisfying 24*[C]+[Mn]≥25 and 33.5*[C]-[Mn]≤18, chromium (Cr): 10% or less (excluding 0%), and the balance of iron (Fe) and inevitable impurities; and austenite as a matrix structure, wherein, when a Charpy impact test is performed at -253°C on a weld heat-affected zone, a lateral expansion in the weld heat-affected zone is 0.32 mm or more. wherein the [C] and [Mn] in the above equation may mean a content (wt%) of the carbon (C) and manganese (Mn) contained in the steel.

A room temperature yield strength of the steel may be 245 MPa or more and less than 400 MPa.

The weld heat-affected zone may include, as a microstructure, 95 area% or more (including 100 area%) of austenite and 5 area% or less (including 0 area%) of grain boundary carbides.

An average grain size of the weld heat-affected zone may be 5 to 200µm.

An average grain aspect ratio of the weld heat-affected zone may be 1.0 to 5.0.

A dislocation density of the steel may be 2.3*10¹⁵ to 3.3*10¹⁵/mm².

In another aspect to the present disclosure, there is provided a method for manufacturing an austenitic steel, including: preparing a slab including, by wt%, manganese (Mn): 10 to 45%, carbon (C): range satisfying 24*[C]+[Mn]≥25 and 33.5*[C]-[Mn]≤18, chromium (Cr): 10% or less (excluding 0%), and the balance of iron (Fe) and inevitable impurities; and heating the slab and then hot-rolling the heated slab to a rolling finishing temperature of 800°C or higher, wherein the [C] and [Mn] in the above equation may mean a content (wt%) of the carbon (C) and manganese (Mn) contained in the slab. The [C] and [Mn] in the above equation may mean a content (wt%) of the carbon (C) and manganese (Mn) contained in the slab.

Solutions to the above problems do not enumerate all the features of the present disclosure, and the various features of the present disclosure and the advantages and effects thereof will be understood in more detail with reference to the specific implementation embodiments and embodiments below.

### [Advantageous Effects]

According to an aspect of the present disclosure, it is possible to provide an austenitic steel that has excellent ultra-low temperature toughness in a weld heat-affected zone to be able to be used as a structural material in ultra-low temperature environments such as a liquefied gas storage tank and a liquefied gas transportation facility, and a method for manufacturing the same.

Effects of the present disclosure are not limited to the above matters, and may be interpreted as including technical effects that can be inferred from the details described in this specification.

### [Brief Description of Drawings]

FIG. 1 is a diagram illustrating a correlation between a carbon content of and manganese content of an austenitic steel according to an aspect of the present disclosure.
FIG. 2 is a diagram schematically illustrating a method for measuring a lateral expansion value in the weld heat-affected zone of the austenitic steel according to an aspect of the present disclosure.

### [Best Mode]

The present disclosure relates to austenitic steel and a method for manufacturing the same, and preferred embodiments of the present disclosure will be described below. Implementation embodiments of the present disclosure may be modified into several forms, and it is not to be interpreted that the scope of the present disclosure is limited to exemplary embodiments described in detail below. The present implementation embodiments are provided to explain the present disclosure in more detail to those skilled in the art to which the present disclosure pertains.

Hereinafter, an austenitic steel according to an aspect of the present disclosure will be described in more detail.

The austenitic steel according to an aspect of the present disclosure includes by wt%, manganese (Mn): 10 to 45%, carbon (C): range satisfying 24*[C]+[Mn] ≥25 and 33.5* [C]-[Mn]≤18, chromium (Cr): 10% or less (excluding 0%), and the balance of iron (Fe) and inevitable impurities, in which, when a Charpy impact test is performed at -253°C on a weld heat-affected zone, a lateral expansion in the weld heat-affected zone may satisfy 0.32 mm or more.

Hereinafter, a steel composition included in the austenitic steel according to an aspect of the present disclosure will be described in more detail. Hereinafter, unless otherwise specified, % indicating the content of each element is based on weight.

### Manganese (Mn): 10 to 45%

Manganese is an element that plays an important role in stabilizing austenite. In order to stabilize austenite at ultra-low temperature, it is preferable that 10% or more of manganese (Mn) is contained. When the manganese (Mn) content is less than 10%, metastable epsilon martensite is formed and is easily transformed into alpha martensite by strain-induced transformation at ultra-low temperature, making it impossible to secure toughness. In order to suppress the formation of the epsilon martensite, there is a method for stabilizing austenite by increasing the carbon (C) content, but in this case, a large amount of carbides may be precipitated and physical properties may rapidly deteriorate. Therefore, the manganese (Mn) content is preferably 10% or more. A preferable manganese (Mn) content may be 15% or more, and a more preferable manganese (Mn) content may be 18% or more. When the manganese (Mn) content is excessive, not only can a corrosion rate of steel be reduced, but it is also not preferable from an economic perspective. Therefore, the manganese (Mn) content is preferably 45% or less. A preferable manganese (Mn) content may be 40% or less, and a more preferable manganese (Mn) content may be 35% or less.

### Carbon (C): Range satisfying 24*[C]+[Mn]≥25 and 33.5*[C]-[Mn]≤18

Carbon (C) is an element that stabilizes austenite and increases strength. In particular, the carbon (C) plays a role in lowering a transformation point Ms or Md from austenite to epsilon or alpha martensite during a cooling process, a processing process, etc. Therefore, carbon (C) is a component that effectively contributes to the stabilization of austenite. When the carbon (C) content is insufficient, the stability of austenite is insufficient, so it is impossible to obtain stable austenite at ultra-low temperature, and external stress may easily cause strain-induced transformation into the epsilon or alpha martensite, so it is possible to reduce the toughness of the steel or lower the strength of the steel. On the other hand, when the carbon (C) content is excessive, the toughness of the steel may rapidly deteriorate due to carbide precipitation, and the strength of the steel may increase excessively, resulting in reduced processability.

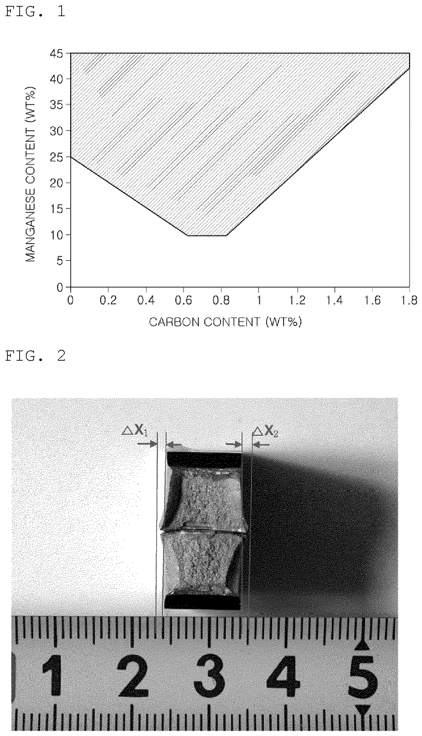

The inventors of the present disclosure have conducted in-depth research on the relative behavior between the carbon (C) and manganese (Mn) contents in relation to carbide formation, and as a result, as illustrated in FIG. 1, and came to the conclusion that determining the relative content relationship between the carbon (C) and manganese (Mn) may effectively stabilize the austenite and effectively control the amount of carbide precipitates. The carbide is formed by the carbon (C), but the carbon (C) does not independently affect the formation of the carbide, but compositely acts with the manganese (Mn) to affect the formation of the carbides.

In order to stabilize the austenite, it is preferable to control the value of 24*[C]+[Mn] (here, [C] and [Mn] mean the content of each component expressed in units of wt%) to 25 or more under the premise that other components meet the range specified in the present disclosure. The boundary refers to an inclined left boundary of a parallelogram area illustrated in FIG. 1. When 24*[C]+[Mn] is less than 25, the stability of the austenite decreases and the processing-induced transformation is caused due to impact at ultra-low temperature, so the impact toughness of the steel may decrease. On the other hand, in order to stabilize the austenite, it is preferable to control the value of 33.5*[C]-[Mn] (here, [C] and [Mn] mean the content of each component expressed in units of wt%) to 18 or less under the premise that other components meet the range specified in the present disclosure. When 33.5*[C]-[Mn] exceeds 18, carbides may precipitate due to the excessive addition of carbon (C), which may reduce the low-temperature impact toughness of the steel. Therefore, in the present disclosure, the carbon (C) is preferably added to satisfy 24*[C]+[Mn]≥25 and 33.5*[C]-[Mn]≤18. As can be seen in FIG. 1, the lowest limit of the carbon (C) content within the range that satisfies the above-mentioned equation is 0%.

### Chrome (Cr): 10% or less (excluding 0%)

Chromium (Cr) is also an austenite stabilizing element. Up to the appropriate amount of chromium added, the austenite is stabilized to improve the low-temperature impact toughness of steel, and the chromium is dissolved in the austenite to play a role in increasing the strength of steel. In addition, the chromium (Cr) is also a component that effectively contributes to improving the corrosion resistance of steel. Therefore, the present disclosure adds the chromium (Cr) as an essential component. The preferable lower limit of the chromium (Cr) content may be 1%, and the more preferable lower limit of the chromium (Cr) content may be 2%. However, the chromium (Cr) is a carbide forming element, and in particular, it may reduce the low-temperature impact toughness of steel by forming carbides at austenite grain boundaries. In addition, when the amount of chromium (Cr) added exceeds a certain level, the excessive carbides may precipitate in the weld heat-affected zone (HAZ), resulting in poor ultra-low temperature toughness. Therefore, the present disclosure may limit the upper limit of the chromium (Cr) content to 10%. The preferable upper limit of the chromium (Cr) content may be 8%, and the more preferable upper limit of the chromium (Cr) content may be 7%.

The austenitic steel according to an aspect of the present disclosure may contain the balance of iron (Fe) and other inevitable impurities in addition to the above-described components. However, since the unintended impurities from raw materials or the surrounding environment may inevitably be mixed in a normal manufacturing process, the unintended impurities may not be completely excluded. Since these impurities are known to those skilled in the art, all of them are not specifically mentioned in this specification. In addition, the additional addition of the effective components in addition to the above-described components is not completely excluded.

The austenitic steel according to an aspect of the present disclosure may include austenite of 95 area% or more as a microstructure in terms of securing the desired physical properties. A preferable fraction of the austenite may be 97 area% or more, and may include a case where the fraction of the austenite is 100 area%. Meanwhile, in the austenitic steel according to an aspect of the present disclosure, the fraction of the carbides may be actively suppressed to 5 area% or less to prevent the deterioration in the ultra-low temperature impact toughness. A preferable fraction of the carbides may be 3 area% or less, and may include a case where the fraction of the carbides is 0 area%. In the present disclosure, the method for measuring a fraction of austenite and a fraction of carbides is not particularly limited, and it may be easily confirmed through measurement methods commonly used by those skilled in the art to measure the microstructure and carbide.

A dislocation density of the austenitic steel according to an aspect of the present disclosure may satisfy the range of 2.3*10¹⁵ to 3.3*10¹⁵/mm². The dislocation density of steel may be measured by measuring the strength of a specific surface of steel using X-ray diffraction and then using the Williamson-Hall method, etc. A person skilled in the art to which the present disclosure pertains may measure the dislocation density of steel without any particular technical difficulties. When the dislocation density of steel does not reach a certain level, the suitable strength as a structural material may not be secured. Therefore, the present disclosure may limit the lower limit of the dislocation density of steel to 2.3*10¹⁵/mm². On the other hand, when the dislocation density is excessively high, it is advantageous in terms of securing the strength of steel, but is not preferable in terms of securing the ultra-low temperature toughness, so the present disclosure may limit the upper limit of the dislocation density of the steel to 3.3*10¹⁵/mm².

The room temperature yield strength of the austenitic steel according to an aspect of the present disclosure may satisfy 245 MPa or more and less than 400 MPa. As the strength of steel increases, the low-temperature impact toughness decreases, and in particular, when the yield strength of steel used at ultra-low temperature of -253°C as in the present disclosure is excessively high, the possibility of not securing the desired impact toughness increases. In addition, since it is difficult for commonly used austenitic welding materials to exceed the strength of the base material, when the strength of the base material is maintained high, a difference in strength may occur between the weld zone and the base material, which may reduce structural stability. Therefore, it is preferable that the room temperature yield strength of the austenitic steel according to an aspect of the present disclosure is less than 400 MPa. Meanwhile, when the room temperature yield strength of steel is excessively low, the thickness of the base material may excessively increase to ensure the stability of the structure, and the weight of the structure may excessively increase accordingly, so the austenitic steel according to an aspect of the present disclosure may limit the lower limit of the room temperature yield strength to 245 MPa.

Since the structure is generally provided by processing and welding the steel material, even if the ultra-low temperature impact toughness of the base material itself is secured, when the ultra-low impact toughness is not secured at the weld zone, the safety of the structure itself may be greatly reduced. Therefore, the austenitic steel according to an aspect of the present disclosure seeks to secure not only the ultra-low temperature impact toughness of the base material itself, but also the ultra-low temperature impact toughness of the weld heat-affected zone (HAZ). Therefore, the present disclosure controls not only the microstructure of the base material but also the fraction and shape of the microstructure of the weld heat-affected zone to a specific range.

By using the austenitic steel according to an aspect of the present disclosure as the base material, when welding is performed under normal welding conditions for welding the ultra-low temperature structures using solid arc welding rods, flux cored arc welding wires, TIG welding rods and wires, submerged arc welding wires, flux, etc., the weld heat-affected zone (HAZ) may include 95 area% or more of austenite and 5 area% or less of carbide. As described in relation to the microstructure of the base material described above, the fraction of the austenite included in the weld heat-affected zone (HAZ) may be 97 area% or more, and may include the case where the fraction of the austenite is 100 area%. In addition, in order to prevent the ultra-low temperature impact toughness from deteriorating in the weld zone, the fraction of the carbides contained in the weld heat-affected zone (HAZ) may be limited to 3 area% or less and may include the case where the fraction of the carbides in the heat-affected zone (HAZ) is 0 area%.

The average grain size of the austenite in the weld heat-affected zone (HAZ) may satisfy the range of 5 to 200µm. When the average grain size of the austenite in the weld heat-affected zone (HAZ) is excessively small, the strength of the weld zone is improved, but the deterioration in the localized ultra-low temperature impact toughness may occur in the weld heat-affected zone (HAZ). Therefore, the austenitic steel according to an aspect of the present disclosure may limit the average austenite grain size in the weld heat-affected zone (HAZ) to 5µm or more. Meanwhile, as the average austenite grain size in the weld heat-affected zone (HAZ) increases, it is advantageous to secure the ultra-low temperature impact toughness of the weld zone, but the deterioration in the localized strength in the weld heat-affected zone (HAZ) may occur. Therefore, the present disclosure may limit the average austenite grain size in the weld heat-affected zone (HAZ) to 200µm or less.

In terms of securing the physical properties in the weld heat-affected zone (HAZ), not only the fraction and average grain size of the austenite fraction, but also the average aspect ratio of the austenite grain are influential factors. When the average grain size aspect ratio of the austenite present in the weld heat-affected zone (HAZ) is excessively small, it is advantageous in terms of securing the ultra-low impact toughness of the weld heat-affected zone (HAZ), but it is disadvantageous in terms of securing the strength of the weld heat-affected zone (HAZ). Therefore, the present disclosure may limit the average grain size aspect ratio of the austenite present in the weld heat-affected zone (HAZ) to a level of 1.0 or more. On the other hand, when the average grain size aspect ratio of the austenite present in the weld heat-affected zone (HAZ) is excessively large, it is advantageous in terms of securing the strength of the weld heat-affected zone (HAZ), but it is disadvantageous in terms of securing the ultra-low temperature impact toughness of the weld heat-affected zone (HAZ). Therefore, the present disclosure may limit the average grain size aspect ratio of the austenite present in the weld heat-affected zone (HAZ) to a level of 5.0 or more.

When welding was performed under normal welding conditions for welding the ultra-low temperature structure using the austenitic steel as the base material according to an aspect of the present disclosure, the lateral expansion value in the weld heat-affected zone (HAZ) of the specimen subjected to the Charpy impact test at -253°C may be 0.32mm or more.

The inventors of the present disclosure found that plastic deformation characteristics are major factors in securing the safety in the case of the steel applied in the ultra-low temperature environments. That is, after in-depth research, the inventors of the present disclosure found that in the case of the steel that satisfies the composition system proposed by the present disclosure, the lateral expansion value (mm) is a more important factor in securing the safety of the weld zone than the Charpy impact energy value (J) of the weld heat-affected zone (HAZ).

The lateral expansion value in the weld heat-affected zone (HAZ) means the average value of the lateral plastic deformation of the specimen subjected to the Charpy impact test at -253 °C. FIG. 2 illustrates a photograph of the specimen subjected to the Charpy impact test based on - 253°C. As illustrated in FIG. 2, an increase amount (ΔX1+ΔX2) of lateral length near the fracture surface may be calculated to calculate the lateral expansion value. When the lateral expansion value in the weld heat-affected zone (HAZ) is 0.32 mm or more, it may be determined to have the minimum low-temperature safety required for the ultra-low temperature structure.

According to the present inventor's research results, it was confirmed that the Charpy impact energy (J) based on -253°C and the lateral expansion value (mm) of the corresponding specimen generally showed a similar tendency to equation 1 below, and the lateral expansion value was 0.32mm or more. It can be seen that as the larger the lateral expansion value (mm), the better the low-temperature impact toughness it has, and it is more effective that the lateral expansion value is 0.72 to 1.4 mm. Lateral expansion value (mm) = 0.0088 * Charpy impact energy value (J) + 0.0893

When welding was performed under normal welding conditions for welding the ultra-low temperature structure using the austenitic steel as the base material according to an aspect of the present disclosure, since the lateral expansion value in the weld heat-affected zone (HAZ) of the specimen subjected to the Charpy impact test at -253°C is 0.32mm or more, it is possible to secure the excellent structural safety when the ultra-low temperature structure is manufactured using the corresponding steel.

Hereinafter, a method for manufacturing an austenitic steel according to an aspect of the present disclosure will be described in more detail.

A method for manufacturing an austenitic steel according to an aspect of the present disclosure includes: preparing a slab including, by wt%, manganese (Mn): 10 to 45%, carbon (C): range satisfying 24*[C]+[Mn]≥25 and 33.5*[C]-[Mn]≤18, chromium (Cr): 10% or less (excluding 0%), and the balance of iron (Fe) and inevitable impurities; and heating the slab and then hot rolling the heated slab to a rolling finishing temperature of 850°C or higher, wherein the [C] and [Mn] in the above equation may mean a content (wt%) of the carbon (C) and manganese (Mn) contained in the slab.

The [C] and [Mn] in the above equation may mean a content (wt%) of the carbon (C) and manganese (Mn) contained in the slab.

### Slab Preparation

A steel slab having a predetermined alloy composition is prepared. Since the steel slab of the present disclosure has the steel composition corresponding to the austenitic steel described above, the description of the alloy composition of the steel slab is replaced with the description of the steel composition of the austenitic steel described above. The thickness of the steel slab is also not particularly limited, and a steel slab having a thickness suitable for manufacturing materials for low or ultra-low temperature structures may be used.

### Slab Heating and Hot-Rolling

The prepared steel slab may be heated and hot-rolled into steel having the desired thickness. The heating temperature of the steel slab is not particularly limited, but the preferred heating temperature of the steel slab may be 1000 to 1300°C.

When the rolling finishing temperature of the hot rolling is excessively low, the excessive internal strain energy may remain in the final steel material, which may reduce the ultra-low temperature impact toughness. Therefore, the present disclosure may limit the lower limit of the rolling finishing temperature of the hot rolling to 800°C. Meanwhile, when the upper limit of the rolling finishing temperature of the hot rolling is excessively high, the microstructure of the final steel may grow excessively and poor strength properties may be implemented, so the present disclosure may limit the upper limit of the rolling finishing temperature of the hot rolling to 1050°C.

### [Mode for Invention]

Hereinafter, an austenitic steel and a method for manufacturing the same according to an aspect of the present disclosure will be described in more detail with respect to specific embodiments. It is to be noted that the examples below are only for understanding of the present disclosure and are not intended to specify the scope of the present disclosure. The scope of rights of the present disclosure may be determined by matters stated in claims and matters reasonably inferred therefrom.

### (Example)

After preparing a 250 mm thick steel slab with alloy compositions shown in Table 1 below, each specimen was manufactured by applying process conditions shown in Table 2 below. Each steel slab contains iron (Fe) and other inevitable impurities in addition to the alloy components listed in Table 1.

**[Table 1]**

| Steel Type | Alloy Component (wt%) | | | |
|---|---|---|---|---|
| | Mn | 24* [C] + [Mn] | 33.5*[C]-[Mn] | Cr |
| A | 24.20 | 33.32 | -11.47 | 3.14 |
| B | 22.50 | 30.90 | -10.78 | 2.85 |
| C | 29.80 | 36.04 | -21.09 | 1.11 |
| D | 38.00 | 44.96 | -28.29 | 2.25 |
| E | 20.50 | 26.26 | -12.46 | 0.85 |
| F | 31.50 | 37.98 | -22.46 | 1.17 |
| G | 33.60 | 39.60 | -25.23 | 11.70 |
| H | 17.20 | 23.44 | -8.49 | 0.80 |
| I | 15.30 | 44.34 | 25.24 | 1.12 |

**[Table 2]**

| Division | Steel Type | Slab Heating Temperat ure (°C) | FDT (°C) | Steel Thickness (mm) |
|---|---|---|---|---|
| Example 1 | A | 1180 | 950 | 12 |
| Example 2 | B | 1180 | 890 | 20 |
| Example 3 | C | 1205 | 940 | 25 |
| Example 4 | D | 1195 | 905 | 30 |
| Example 5 | E | 1205 | 960 | 35 |
| Comparati ve Example 1 | F | 1195 | 790 | 25 |
| Comparati ve Example 2 | G | 1193 | 925 | 35 |
| Comparati ve Example 3 | H | 1200 | 915 | 18 |
| Comparati ve Example 4 | I | 1205 | 916 | 25 |

The microstructures of each Example and Comparative Example listed in Table 2 were observed using an optical microscope, and the results are shown in Table 3 below. In addition, the dislocation densities of each Example and Comparative Example were measured using X-ray diffraction analysis and the room temperature yield strengths were measured using a tensile tester, and the results were listed in Table 3. Thereafter, the welding was performed for each Example and Comparative Example using normal welding conditions used for welding ultra-low temperature structures, and the results are listed in Table 3. In this case, the optical microscope was used to observe the microstructure of the weld heat-affected zone, and the impact energy for the weld heat-affected zone was measured using a Charpy impact tester at -235°C. In addition, the lateral expansion value was measured at an impact test fracture surface of each specimen, and the results are listed in Table 3.

**[Table 3]**

| Divisi on | St ee l Ty pe | Base Material | | | Weld Heat-affected Zone | | | | |
|---|---|---|---|---|---|---|---|---|---|
| | | Microstr ucture (area%) | Room Temper ature Yield Streng th (MPa) | Disloc ation Densit y (*10¹⁵/ mm²) | γ Fract ion (area %) | γ Aver age Grai n Size (µm) | Room γ Aver age Aspe ct Rati o | Cha rpy Imp act Ene rgy (J) | Later al Expan sion (mm) |
| Exampl e 1 | A | Austenit e 100% | 340 | 2.65 | Auste nite 100% | 47 | 1.21 | 127 | 0.91 |
| Exampl e 2 | B | Austenit e 100% | 375 | 2.78 | Auste nite 100% | 42 | 1.45 | 110 | 0.77 |
| Example 3 | C | Austenite 99%, carbides 1% | 356 | 2.75 | Austenite 100%, carbi des 2% | 35 | 1.39 | 121 | 0.85 |
| Exampl e 4 | D | Austenit e 100% | 380 | 2.87 | Auste nite 100% | 46 | 1.41 | 110 | 0.75 |
| Exampl e 5 | E | Austenit e 100% | 310 | 2.34 | Auste nite 100% | 40 | 1.05 | 141 | 1.02 |
| Compar ative Exampl e 1 | F | Austenit e 100% | 542 | 3.85 | Auste nite 100% | 37 | 6.2 | 40 | 0.13 |
| Compar ative Exampl e 2 | G | Austenit e 93%, carbides 7% | 584 | 2.95 | Auste nite 92%, carbi des 8% | 33 | 1.12 | 25 | 0.01 |
| Compar ative Exampl e 3 | H | Austenit e 78%, Epsilon martensi te 22% | 345 | 3.05 | Auste nite 80%, Epsil on marte nsite 20% | 50 | 1.15 | 5 | 0.00 |
| Compar ative Exampl e 4 | I | Austenit e 94%, Carbides 6% | 430 | 2.86 | Auste nite 92%, Carbi des 8% | 42 | 1.08 | 31 | 0.05 |

As shown in Tables 1 to 3, it can be seen that examples that satisfy the alloy components and process conditions limited by the present disclosure have the desired room temperature yield strength and lateral expansion value in the weld heat-affected zone (HAZ), but Comparative Examples that do not satisfy any one or more of the alloy components or process conditions limited by the present disclosure may not satisfy any one of the desired room temperature yield strength or lateral expansion value in the weld heat-affected zone (HAZ).

Although the present disclosure has been described in detail through embodiments above, other types of embodiments are also possible. Therefore, the spirit and scope of the claims set forth below are not limited to the embodiments.

## Claims

1. An austenitic steel, comprising:
by wt%, manganese (Mn): 10 to 45%, carbon (C): range satisfying 24*[C]+[Mn]≥25 and 33.5*[C]-[Mn]≤18, chromium (Cr): 10% or less (excluding 0%), and the balance of iron (Fe) and inevitable impurities; and
austenite as a matrix structure,
wherein, when a Charpy impact test is performed at - 253°C on a weld heat-affected zone, a lateral expansion in the weld heat-affected zone is 0.32 mm or more, and
wherein the [C] and [Mn] in the above equation mean a content (wt%) of the carbon (C) and manganese (Mn) contained in the steel.

2. The austenitic steel of claim 1, wherein a room temperature yield strength of the steel is 245 MPa or more and less than 400 MPa.

3. The austenitic steel of claim 1, wherein the weld heat-affected zone includes, as a microstructure, 95 area% or more (including 100 area%) of austenite and 5 area% or less (including 0 area%) of grain boundary carbide.

4. The austenitic steel of claim 1, wherein an average grain size of the weld heat-affected zone is 5 to 200µm.

5. The austenitic steel of claim 1, wherein an average grain aspect ratio of the weld heat-affected zone is 1.0 to 5.0.

6. The austenitic steel of claim 1, wherein a dislocation density of the steel is 2.3*10¹⁵ to 3.3*10¹⁵/mm².

7. A method for manufacturing an austenitic steel, comprising:
preparing a slab including, by wt%, manganese (Mn): 10 to 45%, carbon (C): range satisfying 24*[C]+[Mn]≥25 and 33.5*[C]-[Mn]≤18, chromium (Cr): 10% or less (excluding 0%), and the balance of iron (Fe) and inevitable impurities; and
heating the slab and then hot rolling the heated slab to a rolling finishing temperature of 800°C or higher,
wherein the [C] and [Mn] in the above equation mean a content (wt%) of the carbon (C) and manganese (Mn) contained in the slab.
